# EUROPEAN PATENT APPLICATION

(11) **EP 4 368 649 A1**
(43) Date of publication of application: **15.05.2024**
(21) Application number: 22207107.8
(22) Date of filing: 14.11.2022
(51) Int. Cl.: C08G 18/28, C08G 18/32, C08G 18/76, C08G 18/80, B01J 19/00

(54) **CONTINUOUS PROCESSS FOR THE MANUFACTURE OF UREA URETHANES**

(71) Applicant: Cliq Swisstech (The Netherlands) B.V., 9747 AC Groningen (NL); RIJKSUNIVERSITEIT GRONINGEN, 9712 CP Groningen (NL)
(72) Inventor: WAGENAAR, Ruben Anne, 9723 AJ Groningen (NL); SLAGT, Vincent Friso, 9401 PV Assen (NL); SIEKMANN, Fanni Lisa, 9354 AT Zevenhuizen (NL); YUE, Jun, 9747 AG Groningen (NL)
(74) Representative: Fabry, Bernd

(57) **Abstract**

Suggested is a continuous process for the manufacture of urea urethanes, comprising or consisting of the following steps:
(a) providing
at least one monohydroxyl compound (a1);
at least one diisocyanate compound (a2);
at least one diamine compound (a3)
optionally at least one isocyanate stabilizer (a4);
at least one solvent (a5);
optionally at least one anti-gelling agent (a6)

(b) blending said components (a2) and (a4) to form a first pre-mix (b1);
(c) feeding said component (a1) and said first pre-mix (b1) to a first continuous reactor to form an intermediate (b2);
(d) blending said components (a3), (a5) and (a6) to form a second premix (b3);
(e) feeding said intermediate (b2) and said second premix (b3) to a second continuous reactor to form the urea urethane; and
(f) collecting the urea urethane from the second continuous reactor.

## Description

### AREA OF INVENTION

The present invention refers to the area of rheology agents and concerns an improved process for the manufacture of urea urethanes.

### BACKGROUND OF THE INVENTION

Urea urethanes represent a group of polymers with the ability to adjust rheology of many aqueous or non-aqueous solutions and dispersions, such as lacquers and paints. They are known for a long time and are typically obtained in a two-step process in which a pre-polymer is formed from an alcohol and a diisocyanate which is subsequently reacted with a diamine.

### RELEVANT PRIOR ART

EP 0198 519 B1 (AKZO) discloses an isocyanate is reacted with an amine in the presence of paint resin solutions to form a urea that forms needle-shaped crystals in very finely dispersed form. These paint binders modified in this way are offered as rheology-control agents and sag-preventing binders, as so-called "sag control agents".

EP 0006252 B1 (BYK CHEMIE) describes a process for preparing a thixotropic agent that eliminates some of the abovementioned disadvantages by describing urea urethanes that are prepared in aprotic solvents in the presence of LiCI by reacting isocyanate adducts with polyamines. The disadvantage of the products prepared in this way is the undefined structure of said urea urethanes due to the preparation process.

EP 1048681 B1 (BYK CHEMIE) proposing to conduct the reaction explained above using molar excess of the diisocyanate compound of at least 1.5, preferably of about 2 to 3 and up to 5. The unreacted diisocyanate is separated off for example by vacuum distillation.

All these references refer to batch processes only.

### OBJECT OF THE INVENTION

So far urea urethanes are obtained from batch processes only, which has several disadvantages. For example, since the reaction is very exothermic, temperature is difficult to control to avoid formation of unwanted byproducts. For complete reactions a significant excess of the isocyanate component is necessary, which makes it mandatory adding a separation step for recovering unreacted educts. Also reaction times of many hours are typically needed.

Therefore, it has been the object of the present invention providing a new process which overcomes the disadvantages explained above.

### BRIEF DESCRIPTION OF THE INVENTION

The present invention refers to a continuous process for the manufacture of urea urethanes, comprising or consisting of the following steps:
(a) providing
   at least one monohydroxyl compound (a1);
   at least one diisocyanate compound (a2);
   at least one diamine compound (a3)
   optionally at least one isocyanate stabilizer (a4);
   at least one solvent (a5);
   optionally at least one anti-gelling agent (a6)
(b) blending said components (a2) and (a4) to form a first pre-mix (b1);
(c) feeding said component (a1) and said first pre-mix (b1) to a first continuous reactor to form an intermediate (b2);
(d) blending said components (a3), (a5) and (a6) to form a second premix (b3);
(e) feeding said intermediate (b2) and said second premix (b3) to a second continuous reactor to form the urea urethane; and
(f) collecting the urea urethane from the second continuous reactor.

Surprisingly, the continuous manufacturing process according to the present invention matches completely with the required profile as explained above. In particular the new flow chemistry set-up shows the following advantages over conventional batch process for the production of urea-urethanes:
- improved temperature control;
- no change in ratio between alcohol and isocyanate component;
- reduced production time;
- in case of microreactors small reaction volumes;
- no isolation of the intermediate pre-polymer necessary;
- no distillation step required, which is essential in the conventional batch process, when a 1:1 ratio is between reactants is used.

### Monohydroxyl compounds (a1)

Typically, the monohydroxyl compounds (component (a1) follow formula (I) R-OH (I)
in which R is n-alkyl or isoalkyl containing 4 to 22 carbon atoms, cycloalkyl containing 6 to 12 carbon atoms, aralkyl containing 7 to 12 carbon atoms or a radical of the formula CₘH₂ₘ₊₁(O-CₙH₂ₙ)ₓ- or CₘH₂ₘ₊₁(OOC-CᵥH₂ᵥ)ₓ-, and m stands for an integer of from 1 to 22, n stands for an integer of 2 to 4, x for an integer of 1 to 15 and v means 4 or 5;

More particularly, suitable monohydroxyl compounds encompass linear or branched, aliphatic or aromatic alcohols having 4 to 22 and preferably 6 to 12 carbon atoms and their alkylene oxide adducts, preferably adducts of on average 1 to 20, and preferably 2 to 10 mol ethylene oxide, propylene oxide, butylene oxide or their mixtures to one of the aforementioned alcohols. Particularly preferred are butanol (all isomers), pentanol, hexanol, heptanol, octanol, 2-ethyl hexanol, nonanol, decanol, undecanol, dodecanol, myristyl alcohol, stearyl alcohol, cetyl alcohol, oleyl alcohol, erucyl alcohol, behenyl alcohol, phenol, benzyl alcohol and their technical mixtures and adducts of 1 to 20 mol, preferably 2 to 10 mol ethylene oxide and/or 1 to 5, preferably 2 to 4 mol propylene oxide.

Particularly preferred, however, are alkyl polyalkylene glycol ethers, preferably alkyl polyethylene glycol ethers having a molecular weight of from about 200 to about 1,000 Dalton, as for example methyl ethers (MPEG) or butyl ethers (BPEG) of PEG100, PEG200, PEG300, PEG350 or PEG500.

### Diisocyanate compounds (a2)

Typically, the diisocyanate compounds (component (a2) follow formula (II) OCN-[A]-NCO (II)
in which A stands for a linear or branched alkylene radical having 2 to 10 carbon atoms or a toluylene radical.

While the diisocyanate compound can be of aliphatic origin, the preferred embodiments encompass aromatic or cycloaliphatic compounds. Particularly preferred is toluylene diisocyanate which as available for example under the trademark Desmodur^{®} in the market. With regard to the performance of the end product a toluylene diisocyanate encompassing about 50 to about 100 mol-% of the 2,4-isomer is particularly preferred.

### Diamine compounds (a3)

Typically, the diamine compounds (a3) follow formula (III), (IV) and/or (V) 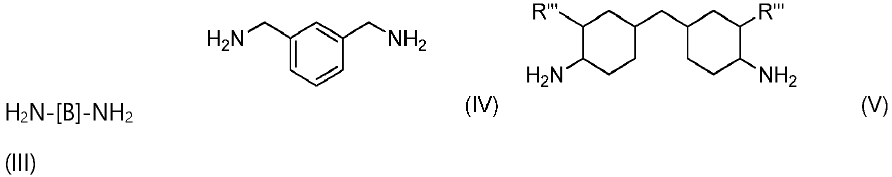 in which B stands for a linear or branched alkylene group having 2 to 12 carbon atoms; and R‴ stands for hydrogen or a methyl group.

Suitable diamine compounds encompass aliphatic, cycloaliphatic and aromatic diamines. The preferred species, however, is xylene diamine.

In a particular preferred embodiment, the urea urethanes of the present invention are obtained by reacting MPEG300, MPEG350, BPEG300 or BPEG350 with toluylene diisocyanate in a molar ration of from 1:1.0 to 1:1.4 to form a pre-polymer, which is subsequently reacted with xylene diamine to form the final product and is illustrated by the following formula:

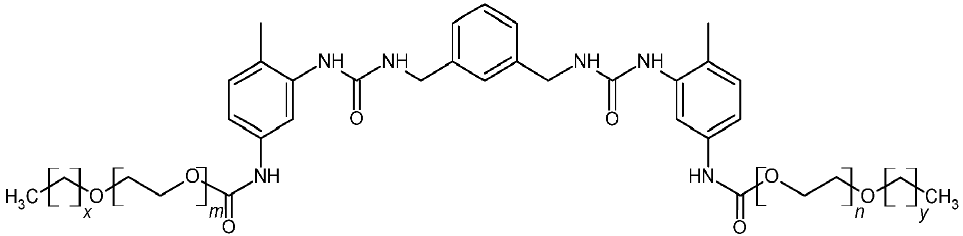

### Isocyanate stabilizers (a4)

Suitable stabilizers (optional component a4) for the formation of the adducts between hydroxyl compounds and diisocyanates are selected from the group consisting of alkyl phosphates, preferably dibutyl phosphate, carboxylic acid chlorides, such as for example benzoyl chloride or mixtures thereof. The use of dialkyl phosphates for this purpose is also an object of the present invention.

### Solvents (a5)

Suitable solvents (component a5) are aprotic solvents, such as dimethyl formamide, dimethyl acetamide, N-methyl pyrrolidone or N-butyl pyrrolidone or similar alkyl pyrrolidones, sulfoxides such as for example DMSO, and mixtures thereof.

### Anti-gelling agents (a6)

Anti-gelling agents (optional component a6) are added to the reaction mixtures in order to avoid or at least to retard self-association of the urea urethanes and thus unwanted thickening of the products. Suitable agents are lithium salts, such as lithium chloride or lithium nitrate. Due to the fact that lithium salts are under discussion for toxicological and environmental reasons, surfactants represent a preferred alternative. Suitable surfactants as anti-gelling agents encompass anionic, non-ionic, cationic and amphoteric surfactants and mixtures thereof. Particularly preferred surfactants are compiled in EP 3459985 B1 (CLIQ) which is hereby incorporated by reference. The most preferred surfactants are sulfosuccinates.

### Microreactors

Basically, the reaction(s) can be performed in any type of continuous tube or loop or flow reactor, with or without active mixing. However, in a particularly preferred embodiment both, the first and the second reactor is a microreactor.

The term microreactor is familiar to those skilled in the art for microstructure apparatuses for chemical processes, the characteristic feature of which is that at least one of the three spatial dimensions of the reaction chamber has dimensions in the range from 1 to 2000 micrometers and which are thus characterized by a high transmission-specific internal surface area, short residence times of the reactants and high specific heat and mass transfer rates. Typically, microreactors show a volume of about 1 ml to about 15 L, preferably 2 to about 100 ml, and particularly from about 5 to about 50 ml. By way of example, reference is made to the European patent application EP 0903174 A1 (BAYER), in which the liquid-phase oxidation of organic compounds in a microreactor consisting of a number of parallel reaction channels is described. Micro-reactors are also disclosed in EP1232786 A2 and EP2001858 B1 (COGNIS).

Microreactors can additionally contain microelectronic components as integral parts. In contrast to known microanalytical systems, microreactors do not require that all lateral dimensions of the reaction chamber are in the micrometer range. Rather, its dimensions are determined exclusively by the nature of the reaction. Accordingly, for certain reactions, microreactors are also suitable in which a certain number of microchannels are bundled, so that micro- and macro-channels or parallel operation of a large number of microchannels can exist side by side. Preferably, the channels are arranged parallel to each other to allow high throughput and to keep the pressure drop as low as possible.

A preferred micro-reactor according to the present invention has one or more reactor chambers each with an inlet for an educt and an outlet for a product. The microreactors, in which the structure and mass of the microreaction systems are predetermined, can be combinations of materials such as silicon-silicon, glass-glass, metal-metal, metal-plastic, plastic-plastic or ceramic-ceramic, or combinations of these materials, even if the preferred embodiment is a silicon glass composite. The structuring of a wafer with a thickness of, for example, 100 to 2000, preferably about 400 micrometers, is preferably carried out by means of suitable microstructuring or etching techniques, e.g., reactive ion etching, whereby, for example, three-dimensional structures can be produced in silicon irrespective of the crystal orientation [see James et al. in Sci. Am. 4, 248 (1993)]. Glass microreactors, for example, can be treated in the same way. Wafers treated in this way can have 10 to 100, preferably 15 to 50 and in particular 20 to 30 micro-reaction systems running parallel to each other, which can be controlled and operated either in parallel or sequentially. The geometry, i.e., the two-dimensional course of the channels, can be very different: straight lines, curves, angles and the like as well as combinations of these form elements are possible. Also, not all micro-reaction systems have to have the same geometry. The structures are characterized by dimensions of 50 to 1500, preferably 10 to 1000 micrometers and perpendicular walls, with the depth of the channels being 20 to 1800 and preferably about 200 to 500 micrometers. The cross-sections of each micro-reaction space, which may but need not be square, are generally in the order of 20x20 to 1500x1500 and in particular 100x100 to 300x300 µm². To supply the micro-reaction spaces with reactants, the wafer is perforated at the points provided for this purpose.

After micro-structuring of a substrate, a closed, inerting layer is preferably produced on the surface of the reaction spaces or channels, which should preferably have a thickness of 50 to 2,000, preferably 100 to 1,000, and in particular of about 200 to 400 nm. This ensures that there are no interactions of the reactants or products with the surface of the substrate, especially of a silicon wafer, and thus no undesirable side reactions or even decomposition reactions, which are otherwise frequently observed. The thermal coating of, for example, a silicon wafer with SiO₂ is carried out by heating the wafer in an oxygen-containing atmosphere (O₂, O₂+HCl, H₂O) to about 1,000 to 1,100 °C. This results in a reaction between silicon and oxygen with the formation of an oxide layer on the entire exposed surface, i.e., in particular also in the channel microstructures. Depending on the duration of this thermal treatment and the oxidation conditions, the thickness of the SiO₂ layer can be adjusted. The oxidation is a root process, i.e., the SiO₂ layer virtually grows into the wafer. The thicker the SiO₂ layer becomes in the course of the process, the slower the further growth proceeds, since the oxygen for oxidation must diffuse through the SiO₂ layer formed. The process is suitable for producing very dense and excellently adhering SiO₂ layers because they are materially bonded to the silicon. In addition, the wafer remains bondable, i.e., it can still be bonded to other wafers, e.g., made of glass or silicon. In general, other coating processes are also suitable, e.g., CVD (chemical vapor deposition) processes for the production of, for example, SiO₂, Si₃N₄ and Al₂O₃ layers, or PVD (physical vapor deposition) processes and plasma chemical oxidation processes, as long as the material remains bondable. The selection of a suitable coating as well as the type of coating depends in all cases on the chemical reaction to be carried out. Finally, the patterned wafer, inerted by coating, is bonded by a suitable process, e.g., anodic bonding, to another wafer, e.g., of glass, preferably Pyrex glass, and the individual stromal channels are sealed tightly to one another.

The microreactors may be divided into one or more mixing zones, one or more reaction zones, one or more mixing and reaction zones, one or more heating and cooling zones, or any combination thereof. Preferably, they have three zones, namely two reaction zones and one cooling zone, whereby in particular two- or multi-stage reactions in liquid or also gaseous phase can be carried out efficiently. In the first zone the mixing of two reactants and their reaction takes place, in the second zone the reaction between the product of the first zone and another reactant takes place, while in the third zone the reaction is stopped by lowering the temperature. It is not absolutely necessary to strictly separate the first and second reaction zones thermally. If, in fact, the addition of a further reactant is required or several are desired instead of one mixing point, this can also take place in reaction zone 2 in addition to zone 1. The micro-reaction systems can be operated sequentially or simultaneously, i.e., in parallel, each with defined reactant quantities. Another way in which the micro-reaction systems can differ in geometry is in the mixing angle at which the reactants meet, which can be between 15 and 270 degrees and preferably 45 to 180 degrees. Furthermore, it is possible to cool or heat each of the three zones independently, or to vary the temperature within a zone as desired, the reaction spaces in this example being channels whose length per zone can be 10 to 500 mm.

Typically, the reactions in said microreactors are conducted at temperatures ranging from about 10 to about 120 °C, preferably from about 30 to about 100 °C. Also preferred are resident times of the reactants in said microreactors ranges from 0.5 to about 300 min and preferably from 1 to about 100 min.

### Reaction conditions

The formation of the urea urethanes is illustrated - but not limited to - by the following scheme:

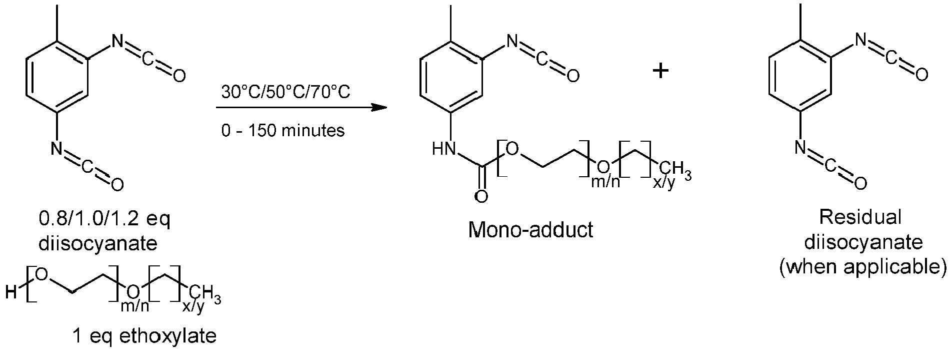

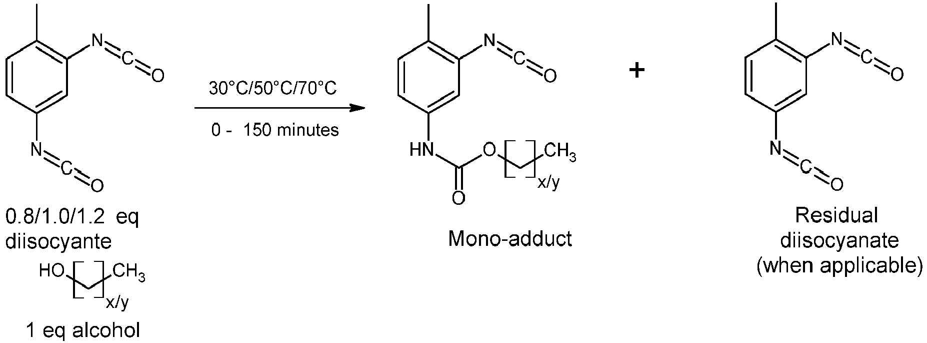

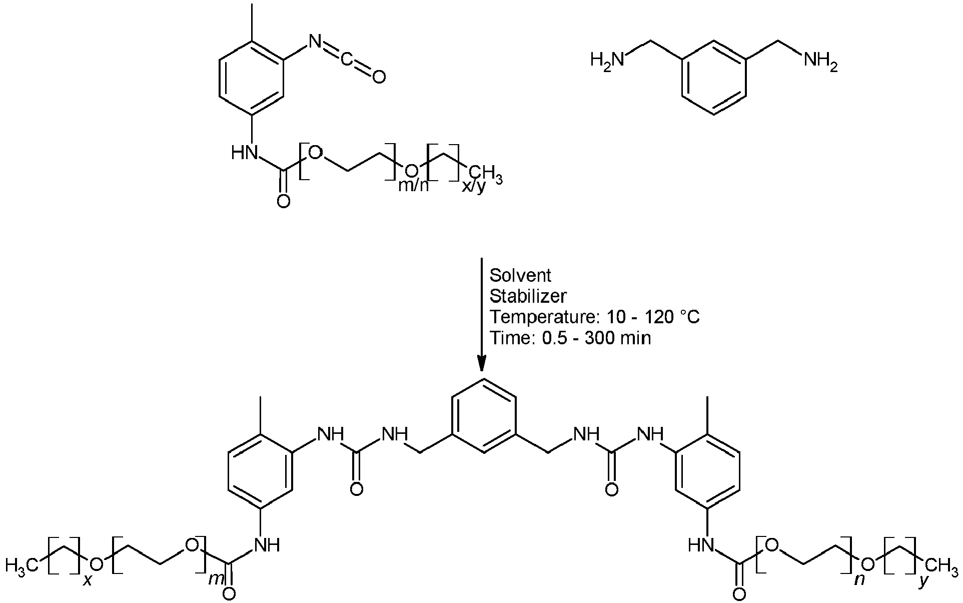

In the first part of the process a pre-polymer, more precisely a mono adduct is formed between the monohydroxyl compound (a1) and the diisocyanate (a2). Typically, said components (a1) and (a2) are reacted in a molar ratio of from about 1:0.5 and about 1:3, preferably from about 0.9 to 1.5. Particularly preferred however, is a molar ratio of about 1:1, since under these conditions any removal of unreacted diisocyanate is void. Preferably the prepolymers show a content of unreacted diisocyanate of less than 0.5 % by weight, and preferably about 0.1 to 0.2 % by weight.

Subsequently the pre-polymer thus obtained is reacted with a diamine compound, preferably in an aprotic solvent also containing the anti-gelling agent. The molar ratio between pre-polymer and diamine compound is adjusted to about 2:1 to about 5:1 The amount of anti-gelling agent can range from 0 to about 10wt.-percent and preferably from 0.1 to about 5 wt.-percent, preferably from about 0.5 to about 2 wt.-percent. The solids amount can be adjusted in broad ranges of from about 5 to about 80 wt.-percent, preferably about 20 to about 60 wt.-percent, and more preferred about 40 to about 50 wt.-percent. The amount to 100 % is the solvent, optionally comprising small amounts of suitable additives as for example corrosion inhibitors. All amounts are calculated on the final product (composition).

The two reactions - the formation of the pre-polymer and its condensation with the diamine - are conducted (preferably in a first and a second microreactor) at temperatures ranging from about 10 to 120 °C and preferably from about 50 to about 70 °C. The resident times of the reactants in said (micro)reactors can range from 0.5 to about 300 min, preferably from about 1 to about 120 min and more preferably from about 5 to about 90 min. A most preferred time interval is from about 15 to about 25 min. The reaction components can be feeded to the microreactors for example by means of HPLC pumps.

### INDUSTRIAL APPLICATION

The urea urethanes produced according to the present invention can be used as thixotropic agents particularly for making lacquers and paints.

### EXAMPLES

### Example 1

### Flow chemistry to form mono adduct from TDI and BPEG using a micro reactor

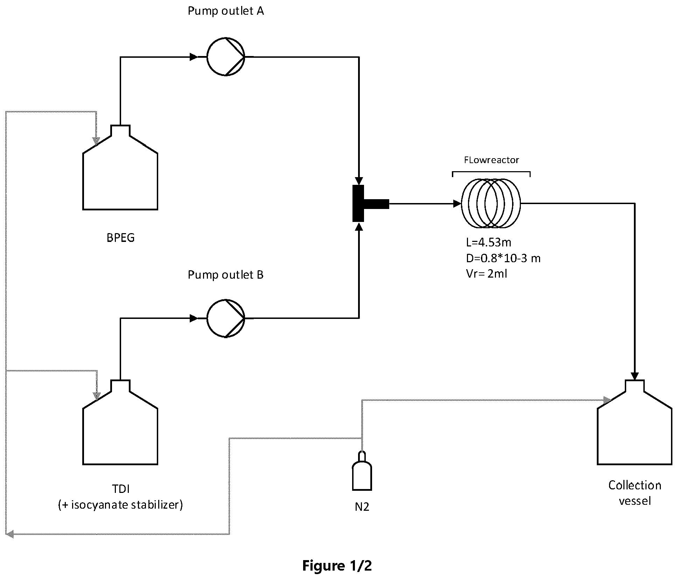

TDI (containing 1 wt.-percent benzoyl chloride as the isocyanate stabilizer) and butyl-PEG (400) were delivered via HPLC pumps and loaded together onto a microreactor with a length of 4.53 m and a volume of 2 ml. The temperature was 30 °C, and the feed ratio of the two components was 0.8, 1.0, 1.2 and 2.1:1.0 Eq., respectively. The resulting monoadduct was transferred from the reactor to a collection vessel. Reaction took place with the passage of nitrogen. The experimental set-up is shown in **Figure 1****.**

### Example 2

### Urea urethane production using a flow process without distillation

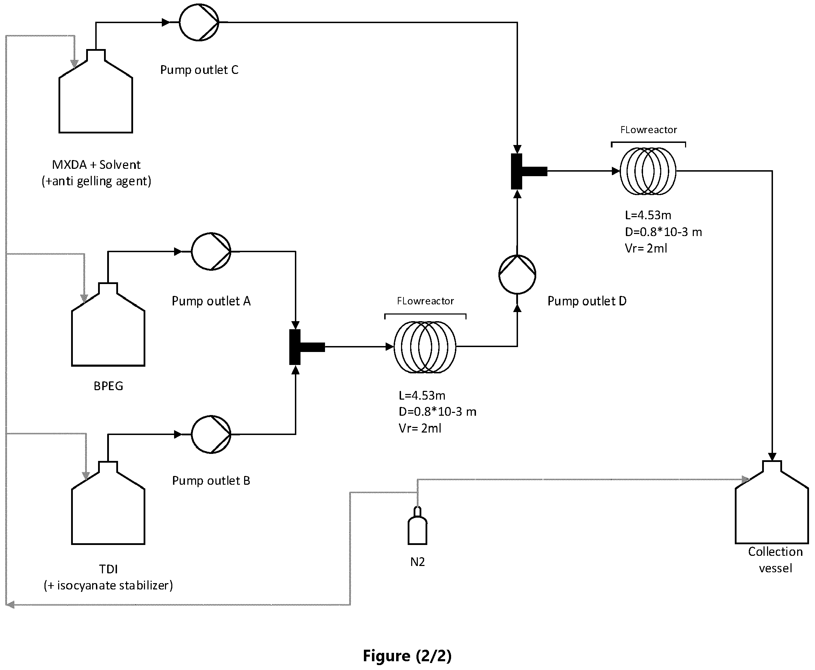

The monoadduct from Example 1 and a mixture m-xylene diamine, NMP and sulfosuccinate were delivered via HPLC pumps and loaded together onto a microreactor with a length of 4.53 m and a volume of 2 ml. The temperature was 60 °C, and the feed ratio of the two components mono adduct and diamine was 2.0:1.0 Eq. The concentration of the anti-gelling agent was 2 wt.-percent calculated on the mixture. The resulting urea urethane was transferred from the reactor to a collection vessel. Reaction took place with the passage of nitrogen. The product was obtained with a solids amount of about 50 wt.-percent. Key here is that the NCO% of the mono-adduct is known, and the diamine concentration of the feed that is added, is adjusted to this NCO%. The experimental set-up is shown in **Figure 2****.**

## Claims

1. A continuous process for the manufacture of urea urethanes, comprising or consisting of the following steps:
(a) providing
at least one monohydroxyl compound (a1);
at least one diisocyanate compound (a2);
at least one diamine compound (a3)
optionally at least one isocyanate stabilizer (a4);
at least one solvent (a5);
optionally at least one anti-gelling agent (a6)
(b) blending said components (a2) and (a4) to form a first pre-mix (b1);
(c) feeding said component (a1) and said first pre-mix (b1) to a first continuous reactor to form an intermediate (b2);
(d) blending said components (a3), (a5) and (a6) to form a second premix (b3);
(e) feeding said intermediate (b2) and said second premix (b3) to a second continuous reactor to form the urea urethane; and
(f) collecting the urea urethane from the second continuous reactor.

2. The process of Claim 1, wherein said monohydroxyl compound (a1) follows formula (I)
R-OH (I)
in which R is n-alkyl or isoalkyl containing 4 to 22 carbon atoms, cycloalkyl containing 6 to 12 carbon atoms, aralkyl containing 7 to 12 carbon atoms or a radical of the formula CₘH₂ₘ₊₁(O-CₙH₂ₙ)ₓ- or CₘH₂ₘ₊₁(OOC-CᵥH₂ᵥ)ₓ-, and m stands for an integer of from 1 to 22, n stands for an integer of 2 to 4, x for an integer of 1 to 15 and v means 4 or 5;

3. The process of Claim 1, wherein said diisocyanate compound (a2) follows formula (II)
OCN-[A]-NCO (II)
in which A stands for a linear or branched alkylene radical having 2 to 10 carbon atoms or a toluylene radical;

4. The process of Claim 1, wherein said diamine compound (a3) follows formula (III), (IV) and/or (V) 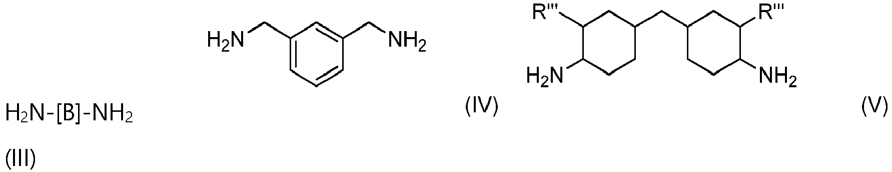 in which B stands for a linear or branched alkylene group having 2 to 12 carbon atoms; and R‴ stands for hydrogen or a methyl group.

5. The process of Claim 1, wherein said isocyanate stabilizer (a4) is a dialkyl phosphate and/or benzoyl chloride.

6. The process of Claim 1, wherein said solvent (a5) is selected from the group consisting of dimethyl formamide, dimethyl acetamide, N-methyl pyrrolidone, N-butyl pyrrolidone and DMSO or mixtures thereof.

7. The process of Claim 1, wherein said anti-gelling agent is a lithium salt or a surfactant.

8. The process of Claim 1, wherein said first and second continuous reactor is a microreactor.

9. The process of Claim 8, wherein said microreactors have volumes of from about 1 ml to about 15 L.

10. The process of Claim 8, wherein said microreactors have 1 to about 100 microchannels, arranged in parallel rows.

11. The process of Claim 1, wherein said components (a1) and (a2) are reacted in a molar ratio of from about 1:0.5 and about 1:3.

12. The process of Claim 1, wherein said components (a1) and (a2) are reacted in a molar ratio of about 1:1.

13. The process of Claim 1, wherein the reactions in said microreactors are conducted at temperatures ranging from about 30 to about 90 °C.

14. The process of Claim 1, wherein the resident times of the reactants in said micro-reactors ranges from 0.5 to about 150 min.

15. The use of dialkyl phosphates as isocyanate stabilizers for the formation of adducts between hydroxyl compounds and diisocyanates.
